# EUROPEAN PATENT APPLICATION

(11) **EP 0 646 542 A2**
(43) Date of publication of application: **05.04.1995**
(21) Application number: 94307134.0
(22) Date of filing: 29.09.1994
(51) Int. Cl.: B68G 7/00, B29C 67/20, B29C 59/00, B29C 44/06, B29C 44/14

(54) **Method of fabricating an upholstered article**

(30) Priority: 30.09.1993 US 129290
(71) Applicant: HOOVER UNIVERSAL INC., Plymouth, Michigan 48170 (US)
(72) Inventor: Kupisz, Neal James, Tecumseh, MI 49286 (US); Eggleston, David Henry, Pinckney, MI 48169 (US)
(74) Representative: Price, Nigel John King

(57) **Abstract**

A process is shown for fabricating upholstered articles in which a cover (14) is formed of a laminated material having an outer layer (18) and an inner foam sheet layer (20). The foam sheet has an interior surface treated to form a skin to prevent penetration of a liquid urethane foam into the cover. The surface is also embossed to produce dimples in the treated surface overcoming the increase in foam stiffness caused by the surface treatment thereby enabling the foam to bend without creasing the treated surface.

## Description

The present invention relates to a method of fabricating an upholstered article and in particular to the treatment of upholstery material to reduce permeability of the material and to reduce the variability of other material properties and characteristics.

Several upholstered articles, particularly seat components, headliners and other vehicle interior trim components, are being fabricated using a pour-in-place foam molding process in which a foam pad is molded by pouring a liquid foaming agent onto an upholstery cover to form a resilient foam pad bonded to the cover. Such a pour-in-place process reduces the number of manufacturing steps required from previous methods in which a shaped foam pad is first molded or cut and then attached to the cover.

While a pour-in-place process has its advantages, it is not without its own difficulties. For example, steps must be taken to prevent the seepage of the liquid foaming agent through the cover, either through a porous fabric or through stitching holes at the seams in a vinyl or leather cover.

The fabric, vinyl or leather outer cover is typically bonded to a thin foam sheet forming a laminated upholstery material. This foam sheet gives the desired stiffness characteristics to the cover. The foam is porous by nature such that when contacted by the liquid foaming agent, it will allow the foaming agent to seep through the foam sheet layer. The liquid foam may seep entirely through the foam layer and through a fabric outer layer or through the stitch holes in a leather or vinyl outer layer, thus damaging the cover.

One approach to preventing the liquid foam seepage through the cover is to use a plastic film barrier along the inner surface of the foam sheet. While a film barrier is effective in preventing seepage, it is expensive and has undesirable effects. A film barrier is undesirable because it prevents the venting of gases produced by the liquid foam agent, creating voids in the foam, it prevents bonding between the poured urethane and the cover and it reduces the breathability of the upholstered article. For seat assembly components in particular, it is desirable that the article breath for the comfort of a seat occupant.

It is an object of the present invention to develop a process to prevent seepage of the liquid foam through an upholstery cover when used in pour-in-place foam molding while maintaining the breathability of the cover.

It is a feature of the present invention to treat the interior foam surface of the cover material to reduce but not eliminate its porosity. This reduces the extent of urethane seepage into the cover material to the point where the liquid foam only penetrates through a portion of the foam sheet. Such a treatment, called "skinning" or "felting", uses high temperature and pressure to cause a surface portion of the foam sheet to permanently compress, forming a skin on the foam sheet. The skin, while remaining porous, is not as porous as the untreated foam sheet. The skin allows some penetration of the liquid urethane into the foam sheet, creating a bond of the cover material to the foam pad molded by the pour-in-place process. Such a bond does not occur with the use of a film barrier. The skin, by remaining permeable, enables venting of carbon dioxide produced during curing of the urethane. This permeability also results in an upholstered article that is breathable and comfortable for use as a seat assembly component.

The heat and pressure may be applied simultaneously.

The skinning surface treatment is also beneficial in applications other than pour-in-place foam molding. For example, when a spray adhesive is used to attach the upholstery cover to a substrate, the adhesive may seep through the cover material. Thus, while the present invention may have a primary application in a pour-in-place process, it is not limited to pour-in-place.

The surface skin, in addition to reducing permeability, also reduces the range of other foam characteristics such as the number of pores per inch and resilience.

The skin is relatively stiff and when the cover material is bent around a small radius curvature, the skin will develop defined creases which show through the outer layer, affecting the article's appearance. To prevent creasing, it is another feature of the present invention to create a pattern in the treated surface. The patterned surface counteracts the stiffness of the skin by dispersing the strain and allows the cover material to bend more naturally, without creasing, similar to the manner in which the foam sheet bends prior to the surface treatment. In a preferred form, the pattern is multi-directional to enable the cover material to be bent in any direction.

The invention will be further described by way of example only with reference to the accompanying drawings, in which:-
Figure 1 is a perspective/sectional view of an upholstered article made according to the process of the present invention;
Figure 2 is an enlarged sectional view of the circled portion of Figure 1;
Figure 3 is a perspective view of an upholstery cover for the article of Figure 1 prior to pour-in-place foam molding;
Figure 4 is a perspective view of the laminated upholstery cover material;
Figure 5 is a perspective view of a pour-in-place mold fixture showing the upholstery cover positioned therein;
Figure 6 is a bottom perspective view of an upholstered seat cushion showing a foam pad molded in place therein;
Figure 7 is a perspective view of a foam treatment process in which the foam is passed through a press and heated to form a skin;
Figure 8 is a fragmentary perspective view showing the treated foam bent around a radius;
Figure 9 is an elevation view showing a pattern embossed in the treated surface of the foam sheet therefor.

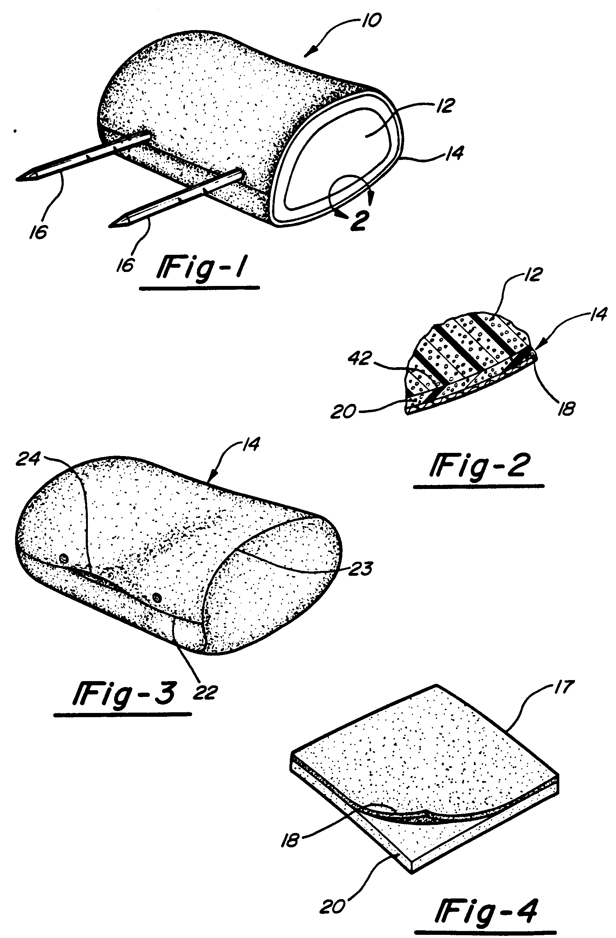

With reference to Figure 1, an upholstered article designated generally at 10 is shown which has been made according to the process of the present invention. Article 10 is a vehicle seat assembly headrest having an interior foam pad 12, a cover 14 and a pair of support legs 16 for mounting the headrest to the seat back of a vehicle seat assembly. The upholstery cover 14 is shown in greater detail in Figures 2 and 4. The cover is made from a laminate upholstery material 17 comprising an outer layer 18 made of fabric, leather or vinyl and a foam sheet 20 bonded to the outer layer. The laminated upholstery material 17 is cut into various pieces of predetermined size and shape and sewn or joined together to form the upholstery cover 14 shown in Figure 3.

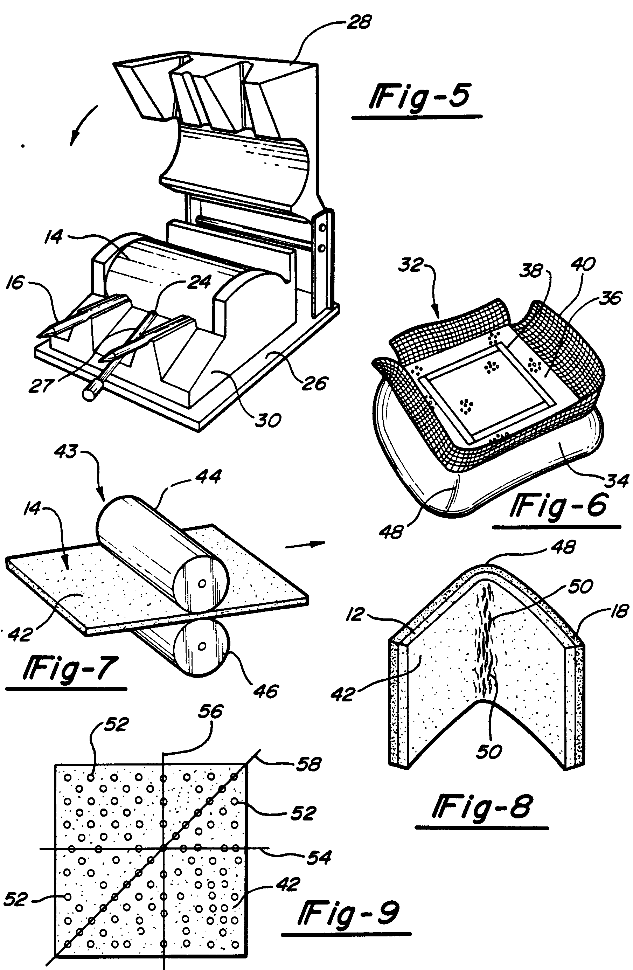

The seam 22 along the bottom edge of the article 10 is left unsewn at the center portion forming an opening 24. The opening 24 extends into an interior cavity formed by the cover 14. This interior cavity is filled with a liquid urethane foaming agent in what is known as a pour-in-place process to mold the resilient foam pad 12 within the cover 14. The pour-in-place process is described below in connection with Figure 5.

In Figure 5, the cover 14 is shown positioned within a pour-in-place mold fixture 26. A fill tube 27 is inserted into the opening 24 in the seam 22 and the upper half 28 of the mold is closed upon the lower half 30. A liquid urethane foam is introduced into the interior of the cover 14 through the fill tube 27 which, when cured, forms the foam pad 12.

Figure 6 is a bottom perspective view of another upholstered article, a seat cushion 32, made by the pour-in-place process. The seat cushion 32 includes an upholstery cover 34 surrounding a foam pad 36. A seat cushion frame 38 is partially embedded within the foam pad 36 which is exposed on the bottom side of the seat cushion as shown. A skirt 40 extends from the cover 34 which can be either removed or securely fastened to the frame 38 beneath the seat cushion. The seat cushion is manufactured using a pour-in-place process in which the cover 34 is positioned in the bottom of a mold fixture and, when the mold fixture is closed, a cavity is formed that is partially defined by the upper portion of the mold fixture. The upper portion of the mold fixture shapes the exposed lower surface of the foam pad 36 shown in Figure 6. The seat cushion is shown to illustrate a pour-in-place article in which the upholstery cover does not completely enclose the foam pad.

To prevent seepage or penetration of the liquid foam through the upholstery cover, the interior surface 42 of the foam sheet 20 (see Figure 2) is treated to reduce the permeability of the foam sheet. The surface 42 is treated by passing the foam sheet 20 separately or the laminated cover material 17 through a hot press 43 comprising rollers 44 and 46. The rollers apply pressure to the foam and roller 44 is heated to heat set by permanently compressing the cells of the foam sheet at the surface 42. This treatment forms a skin having significantly reduced permeability as compared to the untreated foam surface. The reduced permeability of the foam sheet, limits the penetration of the liquid into the foam sheet. The liquid will partially penetrate into the foam sheet, filling some of the pores in the foam sheet to form a secure bond between the urethane pad and the cover 14.

When the cover material 17 is bent around a relatively small radius curve, such as the bend at corner 48 in the seat cushion 32, the skin on the treated foam surface 44 will form a plurality of creases 50. These creases, known as knuckling, are caused by the relative increase in stiffness of the skin as compared to the underlying foam. The creases 50 can result in an undesirable outer appearance to the cover outer layer 18.

To prevent the formation of the creases 50, the treatment process also embosses a pattern into the foam surface 42. The embossed pattern consists of a plurality of dimples formed in the surface 42 arranged in a uniform distribution. One embossed pattern is shown in Figure 9 in which the surface 42 has been formed with a plurality of circular dimples 52. The dimples assist the foam in bending by overcoming the increased stiffness of the skin and allowing the stresses to be dispersed over a larger area. The result is that the foam will bend in a natural manner without creasing.

A preferred pattern of the dimples 42 is one that regardless of the axis of bending of the cover material, the orientation of the bend axis to the embossed pattern will be approximately the same. With the circular dimples, any bend axis, whether it be horizontal axis 54, vertical axis 56 or diagonal axis 58, will diametrically cross a plurality of the dimples 52, allowing bending of the foam without the formation of creases.

The process of the present invention for fabricating upholstered articles using a pour-in-place foam molding, utilizes a treatment of the cover material to prevent foam penetration. The cover material is a laminate construction having a fabric or other permeable outer layer bonded to a thin foam sheet inner layer. The interior surface of the foam sheet is treated with heat and pressure to reduce its porosity and thus reduce the amount of liquid foam penetration. In addition, a pattern is embossed into the foam sheet inner surface to facilitate bending of the cover material around a small radius without the formation of creases in the skin formed on the foam surface. It is to be understood that the invention is not limited to the exact construction illustrated and described above, but that various changes and modifications may be made without departing from the scope of the invention as defined in the following claims.

## Claims

1. A method of treating a foam sheet having first and second surfaces comprising the steps of:
pressing said foam sheet and applying heat to said first surface to heat set the foam sheet at said first surface by permanently compressing the foam cells thus forming a skin at said first surface having a reduced porosity as compared to the foam that is not heat set; and
embossing said first surface to form a plurality of dimples in said first surface.

2. The method of claim 1, wherein said dimples comprise dimples which are circular or multidirectional in shape.

3. A foam sheet product made by the process of claim 1 or 2.

4. A method of manufacturing a laminated upholstery material comprising:
providing a thin foam sheet and treating it in accordance with the method of claim 1 or 2;
providing an outer cover sheet;
bonding said outer cover sheet to said second surface of said foam sheet forming a sheet of laminated upholstery material.

5. A laminated upholstery material made by the process of claim 4.

6. A method of fabricating a padded upholstered article comprising the steps of:
providing a thin foam sheet and treating it in accordance with the method of claim 1 or 2;
providing an outer cover sheet;
joining said outer cover sheet to said second surface of said foam sheet forming a sheet of laminated upholstery material; and
joining a resilient foam pad to said first surface of said foam sheet to cover at least a portion of said resilient foam pad.

7. The method of claim 6, wherein said resilient foam pad is joined to said first surface of said foam sheet by pouring a liquid foaming agent onto said treated first surface and allowing said agent to cure to form said resilient foam pad in contact with said treated first surface of said foam sheet, said skin on said treated surface allowing limited permeation of said foaming agent into said foam sheet to join said resilient foam pad to said laminated upholstery material.

8. A padded upholstered article made by the process of claim 6.

9. A padded upholstered article comprising:
think foam sheet having first and second surfaces, said first surface having a skin with a reduced porosity as compared to the remainder of said foam sheet and a pattern embossed in said first surface;
an outer cover sheet joined to said second surface of said foam sheet; and
a resilient foam pad joined to said second surface of said foam sheet whereby said foam sheet and said outer cover serve to cover at least a portion of said resilient foam pad.

10. The article of claim 9, wherein said embossed pattern comprises a plurality of circular dimples or a plurality of dimples that are multi-directional in shape.
